(19) Europäisches Patentamt

European Patent Office

Office européen des brevets

(11) **EP 1 734 711 A1**

(12) **EUROPEAN PATENT APPLICATION**

(43) Date of publication:
20.12.2006 Bulletin 2006/51

(51) Int Cl.:
*H04L 27/26* (2006.01)          *H04Q 7/36* (2006.01)

(21) Application number: 05291271.4

(22) Date of filing: 13.06.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **ALCATEL**
**75008 Paris (FR)**

(72) Inventor: **Gerlach, Christian, Dr.**
**71254 Ditzingen (DE)**

(74) Representative: **Brose, Gerhard et al**
**Alcatel**
**Intellectual Property Department, Stuttgart**
**70430 Stuttgart (DE)**

Remarks:
Amended claims in accordance with Rule 86 (2) EPC.

(54) **A method for OFDM symbol sequence adaptation avoiding neighbor subcarrier interference, a transmitter, a program module and a mobile network therefor**

(57)     The invention concerns a method for reducing the interference between OFDM symbols originated from different asynchronous transmitters using at least one subcarrier, whereby a continuous waveform of at least one of said at least one subcarrier over consecutive OFDM symbols is used for the transmission of signals by means of said consecutive OFDM symbols, a transmitter, a program module and a mobile network therefor.

Fig. 5

**Description**

The invention relates to a method for reducing the interference between OFDM symbols (OFDM = Orthogonal Frequency Division Multiplexing) according to the preamble of claim 1, a transmitter according to the preamble of claim 6, a program module according to the preamble of claim 7 and a mobile network according to the preamble of claim 8.

OFDM air interfaces will become increasingly important e.g. for future evolutions of air interfaces in single frequency 3GPP Radio Access Networks (3GPP = 3rd Generation Partnership Project), for Wireless Local Area Networks (WLANs) e.g. according to the IEEE 802.11a standard or for a 4th generation air interface.

Given the licensed bandwidth, transmission capacity from network providers e.g. for WEB surfing or video streaming has to be as high as possible for all users to serve as many subscribers as possible. Further the quality of service experienced by the user and the coverage of the service is an important property demanded by the user. So OFDM transmission shall also work well at the cell borders of a single frequency network.

In cellular systems with a frequency re-use factor of 1 the signal to interference ratio at the cell border approaches the factor 1 or 0 dB, so that no useful transmission from the base station to the mobile terminal can be kept up. Therefore in CDMA systems (CDMA = Code Division Multiple Access) soft handover was introduced using a different code from the neighboring cell in addition to the primary code from the serving cell. Additionally, both base stations use a differently scrambled pilot signal. For packet transmission using High Speed Downlink Packet Access (HSDPA) no such solution is given reducing the coverage of HSDPA transmission to a fraction of the cell area.

In OFDM transmission, frequency patterns are allocated to the mobile terminals instead of codes in CDMA systems. Cross-cell interference can be coordinated allowing improvement of reception in the interference region.

Further, to ensbis channel estimation in an OFDM system in the interference region of two cells, it is assumed that pilot and signaling symbols have higher energy than the data symbols which allows channel estimation even if the pilot symbol of the serving cell falls on the same subcarrier as the data symbol of the interfering cell.

But as a consequence it is necessary that the pilot symbols of different cells do not fall on the same subcarrier, so the pilot symbols are distributed on different frequency grids in different cells to allow channel estimation. These frequency grids are in the following called pilot grids.

Since usually the interfering base stations are asynchronous as e.g. in current UMTS Radio Access Networks (UMTS = Universal Mobile Telecommunication System), interfering subcarriers of different frequency are no longer orthogonal to the desired subcarrier on the desired frequency due to the time shift of the subcarrier wave functions. So pilot to pilot interference still occurs which reduces the performance of the channel estimation.

Therefore, the frequency shift of the pilot grid has to be made large enough for neighboring base stations, so that the interference between the pilot symbols decreases. This has to be taken care of in cell planning for all cells of a network that distributes the pilot grids to the cells.

If the distance between the pilot symbols of a pilot grid is p, then the aggregation of multiple frequency shifts for a pilot grid can not be larger than p since then the same pattern is reached again. So if the frequency shift necessary to avoid interference between possible pilot grids is too large, only few pilot grids remain to be distributed.

Since for network cell planning and multiple antennas a lot of different pilot grids are needed, smaller frequency shifts should be possible to result in more pilot grids for distribution.

The object of the invention is to propose a method for reducing the interference between OFDM symbols originated from different asynchronous transmitters which allows for a small shift between the frequencies used for signal transmission by the different asynchronous transmitters.

This object is achieved by a method according to the teaching of claim 1, a transmitter according to the teaching of claim 6, a program module according to the teaching of claim 7 and a mobile network according to the teaching of claim 8.

The main idea of the invention is to lay the pilot symbols of a transmitter on the same subcarrier frequency for each OFDM symbol of a TTI interval (TTI = Transmission Time Interval) and to adapt the pilot symbol sequence over time so that including the cyclic prefix, which is used to avoid inter symbol interference after channel transmission in the receiver, in the time domain a continuous wave results.

This continuous wave representing the pilot symbol sequence originated by a transmitter leads to orthogonality between pilot symbol sequences of adjacent frequencies, so that channel estimation can work without pilot interference even if in an asynchronous neighbor cell the pilot grid is just on the adjacent frequencies.

The principle can be applied for any kind of interferers like e.g. mobile terminals or base transceiver stations if there is freedom for adaptation.

Further developments of the invention can be gathered from the dependent claims and the following description.

In the following the invention will be explained further making reference to the attached drawings.

Fig. 1 schematically shows the interference situation in the downlink at the border between two cells in a single frequency network.

Fig. 2 schematically shows the interference situation in the uplink at the border between two cells in a single frequency network.

Fig. 3 schematically shows example pilot grids with a pilot distance of p=12 in two neighboring cells. Further a data frequency pattern that can be used for multiplexing is depicted.

Fig. 4 schematically shows two pilot symbols $g_k(t=0)$ and $g_k(t=1)$ at frequency k of one cell that cause interference in the analysis interval for a desired pilot symbol $s_{k1}(t=0)$ at frequency k-1 in a neighbored cell.

Fig. 5 schematically shows the adaptation of consecutive pilot symbols P(1) and P(2) to avoid interference in neighbor cells on neighbor subcarriers.

A mobile network according to the invention comprises mobile terminals and base transceiver stations. At least one of the mobile terminals or the base transceiver station is a transmitter according to the invention.

Each of said mobile terminals is connected to one of said base transceiver stations, and the base transceiver stations are in turn connected via base station controllers to a core network.

The mobile terminals comprise the functionality of a mobile terminal for OFDM transmission in a mobile network as e.g. a WLAN or a UMTS network, i.e. they can be connected to a mobile network by means of a base transceiver station.

The base transceiver stations comprise the functionality of a base transceiver station of a mobile network as e.g. a WLAN or a UMTS network, i.e. they provide the possibility for mobile terminals to get connected to the mobile network. Furthermore, the base transceiver station comprises means for distributing data on an OFDM time-frequency grid for data transmission to different mobile terminals in the mobile network accommodating the use of pilot grids suitable for channel estimation. Furthermore, the base transceiver station comprises means for influencing the pilot symbols in an OFDM time-frequency grid.

The transmitter according to the invention is a mobile terminal or a base transceiver station for Lhe transmission of signals by means of OFDM symbols that applies at least one subcarrier and that comprises means for using a continuous waveform of at least one of said at least one subcarrier over consecutive OFDM symbols for the transmission of signals by means of said consecutive OFDM symbols.

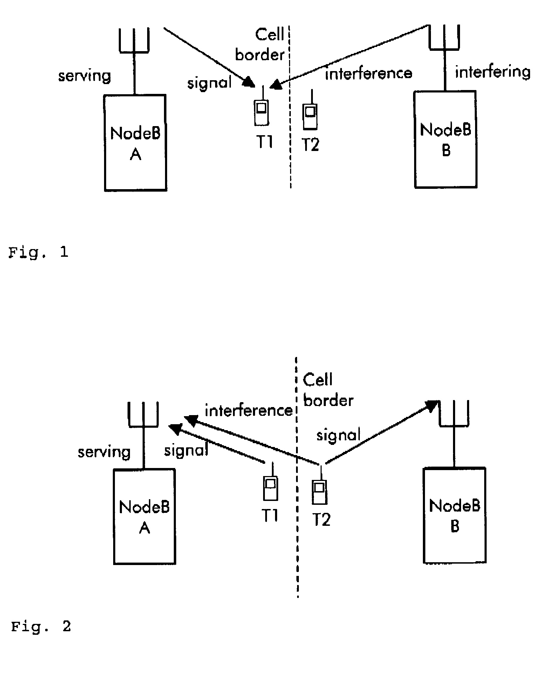

In the following, by way of example the method according to the invention is described in detail making reference to figs. 1 to 5.

The method according to the invention is described for an OFDM transmission for UTRAN enhancement.

Fig. 1 shows a single frequency OFDM network that comprises by way of example two base stations NodeB A and NodeB B and two mobile terminals T1 and T2.

The mobile terminal T1 is connected to the base station NodeB A, i.e. the base station NodeB A is the serving base station for the mobile terminal T1 which is depicted by an arrow from the base station NodeB A to the mobile terminal T1. As the mobile terminal T1 is located near the cell border of the cell that is served by the base station NodeB A, which is depicted by a dotted line, the mobile terminal T1 notices interference from the base station NodeB B, which is depicted by an arrow from the base station NodeB B to the mobile terminal T1.

In a region where two cells overlap and that are characterized by strong interference of neighbor base stations, like e.g. the region in which the mobile terminals T1 and T2 are located, channel equalization by means of pilot symbols and the signaling to the mobile terminals from both base stations NodeB A and NodeB B must be possible.

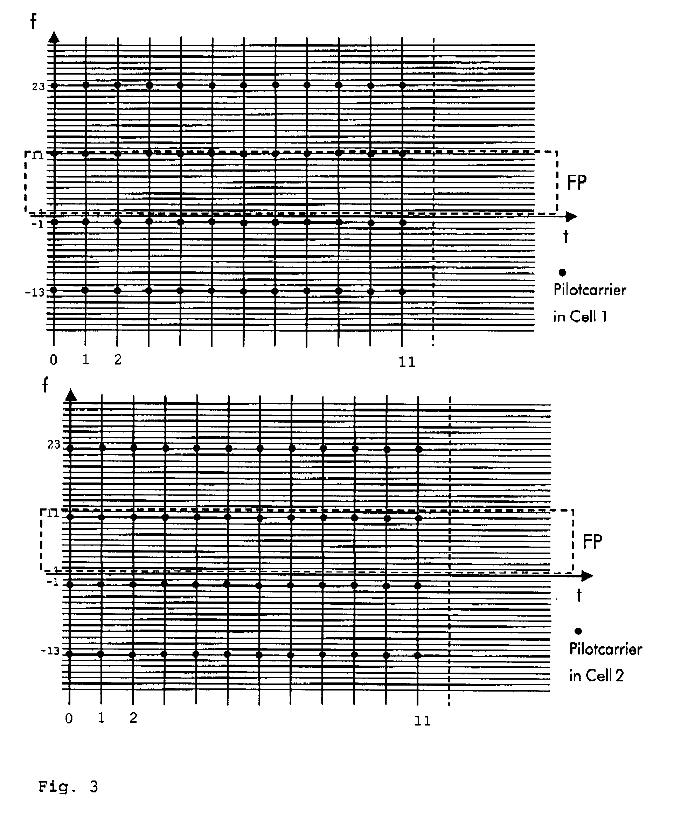

Fig. 2 shows the same single frequency OFDM network that is depicted in fig. 1 with the difference that in fig. 2 the interference situation in the uplink is depicted.

In the uplink the situation can be similar to the situation in the downlink if the same frequencies are used by mobile terminals from different cells. The pilot subcarrier frequencies shall be different for the different cells.

In fig. 2 the mobile terminal T1 is connected to the base station NodeB A, i.e. the base station NodeB A is the serving base station for the mobile terminal T1 which is depicted by an arrow from the mobile terminal T1 to the base station NodeB A. As the mobile terminal T2 is located near the cell border of the cell that is served by the base station NodeB A, which is depicted by a dotted line, the base station NodeB A notices interference from mobile terminal T2, which is depicted by an arrow from the mobile terminal T2 to the base station NodeB A.

In the following, by way of example, only the interference in the downlink is considered.

In order to allow channel estimation in the interference region of two cells, it is still assumed that pilot symbols have higher energy than the data symbols which allows channel estimation even if the pilot symbol of the serving cell falls on the same subcarrier as the data symbol of the interfering cell. A similar approach could be used for the signaling information.

A data frame unit also called TTI interval consists of s OFDM symbols in one time interval of e.g. 2 ms. Each OFDM symbol has a number M, like e.g. 704, useful subcarriers along the frequency axis on which pilot symbols could be placed.

Pilot symbols should be placed without interfering with pilot symbols of the neighbor cell. NodeBs are usually not time synchronized, so time planning of pilot symbol positions is not possible since nothing can be said about the specific point in time of asynchronous NodeBs. So to avoid interference, the pilot symbols are placed continuously on different frequencies in different cells. Thus the pilot pattern is then a grid of pilot subcarriers with distance p.

In fig. 3, pilot grids are depicted for two cells. The available subcarriers are depicted by means of horizontal parallel lines along the frequency axis f and the OFDM symbols are depicted by means of vertical parallel lines along the time axis t. The pilot symbols are marked by dots and have a distance of p=12 along the frequency axis.

Furthermore, an exemplary frequency pattern FP that is used for data transmission from and to a mobile terminal and that shall consist of 11 adjacent subcarriers in 12 consecutive OFDM symbols is given by the subcarriers inside the dotted rectangles. If pilot subcarriers fall on the subcarriers of such a frequency pattern FP used for data transmission, the respective subcarriers are stolen from the frequency pattern FP which can be shown to be acceptable.

In a different cell the pilot grid is shifted in frequency to avoid interference from neighbor base station pilot symbols, therefore the pilot grid from cell 1, which is the upper grid in fig. 3 is shifted by one subcarrier with respect to the pilot grid from cell 2, which is the lower grid in fig. 3.

If this shift is big enough the interference from neighbor base station pilots is negligible.

In order to have enough different pilot grids for a lot of cells and to support a large number of antennas with individual pilot symbols each, a high number of different pilot grids is needed which means that the available pilot grids are densely packed and have to work also with a small shift or a shift of one subcarrier in frequency. So in the interference region of cells using those little separated pilot grids the channel estimation should still be possible.

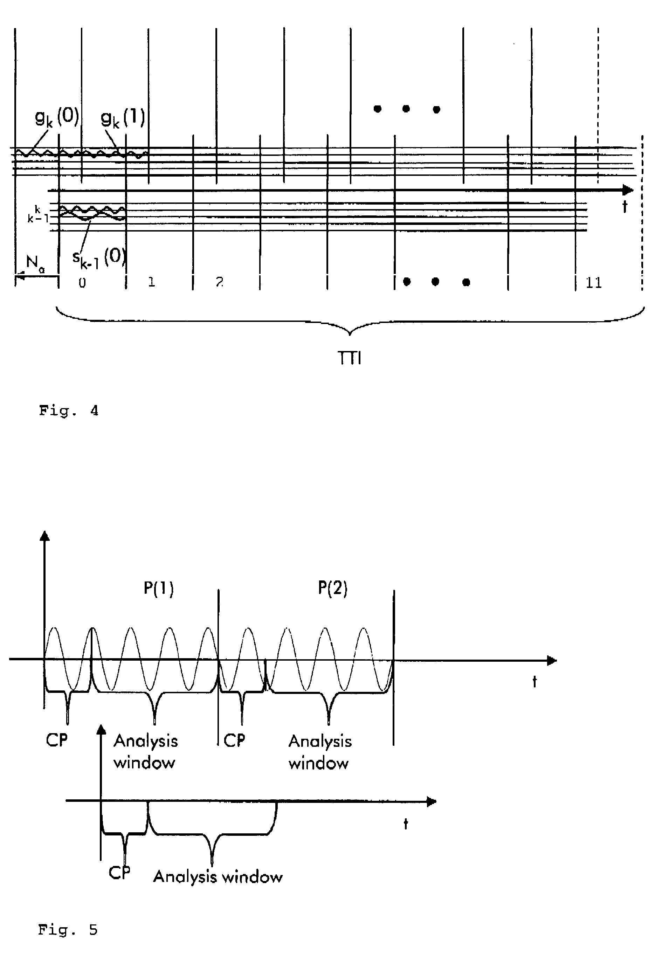

In fig. 4 the interference situation between pilot symbols from different cells is sketched in more detail. The horizontal parallel lines depict the subcarriers that are available for OFDM symbols and the vertical parallel lines depict the borders of the OFDM symbols along the time axis t. There are two sets of OFDM symbols over the time period of a Transmission Time Interval TTI that are shifted in time against each other and that belong to two different cells. This shift in time is called $N_a$ in fig. 4.

In the upper part, by way of example, the subcarrier wave functions of two pilot symbols $g_k$(t=0) and $g_k$(t=1) of OFDM symbol 1 and 2 respectively from an interfering cell, e.g. the cell that comprises the base station NodeB B in fig. 1, are depicted. In this case, the index k numbers the subcarriers and the index t denotes to which OFDM symbol the pilot symbol belongs.

In the lower part, by way of example, the subcarrier wave functions of the desired pilot symbol $s_{k1}$(t=0) of OFDM symbol 0 of a serving cell, e.g. the cell that comprises the base station NodeB A in fig. 1, is depicted. Again, the index k numbers the subcarriers and the index t denotes to which OFDM symbol the pilot symbol belongs.

As regards the interference situation when measuring the desired pilot symbols as e.g. $s_{k-1}$(t=0) for channel estimation, one has to remember that the interference stems from one or multiple asynchronous base stations. Looking at the OFDM signal analysis with the analysis window of the fast fourier transfermation (FFT) e.g. for the subcarrier frequency k-1, one sees that the interference from a neighbor base station consists of two consecutive data or pilot symbols $g_k$(t) and $g_k$(t+1) for every frequency on the frequency axis.

Due to their higher energy the pilot interference is more critical than the data interference.

One may first assume a non-dispersive transmission channel for the interference. Then the interfering symbols would not be smeared in time. If a dispersive channel with a delay spread in the order of the cyclic prefix, which is used to extend the different data or pilot symbols, is taken into account, the situation is still similar maybe leading to consideration of a third neighbored interfering symbol with just little influence.

The length of the analysis window in samples corresponding to the FFT transformation length shall as usual be denoted by N. The length of the cyclic prefix in samples is $N_p$ giving the total OFDM symbol length of $N_s=N+N_p$ accordingly. If the advance in time of the interfering OFDM symbol containing pilot symbol $g_k$(0) against the desired OFDM symbol containing pilot symbol $s_{k1}$(0) is called $N_a$, the whole interfering signal I(t=0) in the considered analysis window for the desired pilot symbol $s_{k-1}$(0) assuming an ideal channel can now be captured by two sums as given by the following formula:

$$I_n(t=0) = \frac{1}{N}\sum_k g_k(0)\,\mathrm{rect}\left(\frac{n+N_a-\frac{N_s}{2}}{N_s}\right)\cdot e^{j2\pi\frac{k(n+N_a-N_p)}{N}}$$
$$+\frac{1}{N}\sum_k g_k(1)\,\mathrm{rect}\left(\frac{n+N_a-\frac{3N_s}{2}}{N_s}\right)\cdot e^{j2\pi\frac{k(n-N_s+N_a-N_p)}{N}}$$

In this formula, the index n denotes the samples along the time axis t within one OFDM symbol. The analysis window for the FFT transformation is then $[N_p, N_p+N-1]=[N_p, N_s-1]$.

The task is now to minimize interference from neighbor base station pilot symbols on the desired pilot symbols used for channel estimation.

In the invention, it is now recognized that interfering pilot symbols of a different frequency are no longer orthogonal to the desired pilot symbol due to their shift in time or, as it can be expressed, due to the step in the complex function at the OFDM symbol borders of the interfering signal.

So, the invention is to create continuous interfering signals by restricting the subcarrier sequence of pilot symbols $\mathbf{g}_k(t)$ over time t for an interferer, be it pilot, signaling or data. This results in continuous waves for the frequency k over multiple OFDM symbols that are again orthogonal to the desired subcarrier wave function, independent of an arbitrary time shift to the desired subcarrier wave function in its analysis window.

In fig. 5, the subcarrier wave functions of the two pilot symbols P(1) and P(2) of two consecutive OFDM symbols from an interfering cell are depicted along the time axis t in the upper part. The OFDM symbols starts with a cyclic prefix CP, and the analysis window contains the information. In this case, according to the invention, the subcarrier wave functions of the two pilot symbols P(1) and P(2) and the cyclic prefixes CP form a continuous wave.

In the lower part of fig. 5, the analysis window of the desired pilot symbol from the serving cell is time shifted with respect to the interfering pilot symbols P(1) and P(2), as the two base stations of the two cells are asynchronous.

To achieve continuity of the interfering time signal part for the frequency $\kappa$, the following equation must be fulfilled:

$$\frac{1}{N} e^{j2\pi\frac{\kappa(N_a-N_p)}{N}} g_\kappa(0) \cdot e^{j2\pi\frac{\kappa n}{N}} = \frac{1}{N} e^{j2\pi\frac{\kappa(N_a-N_p)}{N}} g_\kappa(1) \cdot e^{j2\pi\frac{\kappa(n\cdot N_S)}{N}} .$$

From this can be deduced, that the following conditions must be fulfilled:

$$g_\kappa(0) = g_\kappa(1) \cdot e^{-j2\pi\frac{\kappa N_S}{N}} \quad \text{or} \quad g_\kappa(1) = e^{j2\pi\frac{\kappa N_S}{N}} \cdot g_\kappa(0) .$$

So in general the derived condition for the sequence of single carrier symbols, like e.g. pilot symbols, is the following:

$$g_\kappa(t+1) = e^{j2\pi\frac{\kappa N_S}{N}} \cdot g_\kappa(t)$$

This condition can be used by a transmitter according to the invention in order to control the waveform of a subcarrier in such a way that a continuous waveform of the subcarrier over consecutive OFDM symbols results. This results in the avoidance of interference to asynchronous subcarriers from neighbor cells. So it is shown that then no interference occurs from these neighboring asynchronous single carrier symbols of different frequency esp. asynchronous interfering pilot symbols of different but adjacent frequency.

The evolution of the pilot symbol waveform could be continued for every OFDM symbol according to the above equation also across TTI interval borders. Then each TTI interval would probably start with different pilot symbol values $\mathbf{p}_k(0)$.

One may want to have in each TTI interval the same pilot symbol configuration or maybe the same for every second TTI interval. Then the continuity of the waveform would e.g. be interrupted at the end of a TTI interval and at the beginning of Lhe next TTI interval the values could be reset to $\mathbf{p}_k(0)=1$ for all $k\in\{0, ...M\}$.

This step in the waveform can now also be used for synchronization purposes.

This step would result again in interference but it is much more seldom as with unadapted pilot symbols. Further it could be anticipated and taken into account in the channel estimation.

It can also be noted that no pilot to adjacent data interference is incurred.

The principle can also be applied to other subcarrier interferences besides pilot symbols in uplink as well as in downlink where an adaptation is possible.

With the invention now a dense packing of pilot grids suitable for channel estimation is possible.

If the pilot symbol distance is p now all number of p pilot shifted pilot grids can be used for frequency planning in OFDM single frequency networks. Further the whole number of pilot grids is also available for multiple antennas.

The above mentioned advantages are very important for the operation of a true OFDM single frequency network and full mobility in that network.

## Claims

1. A method for reducing the interference between OFDM symbols originated from different asynchronous transmitters (NodeB A, NodeB B, T1, T2) using at least one subcarrier **characterized in, that** at least one of said at least one subcarrier is controlled in such a way that a continuous waveform of said at least one of said at least one subcarrier over consecutive OFDM symbols is used for the transmission of signals (P(1), Y(2)) by means of said consecutive OFDM symbols.

2. A method according to claim 1, **characterized in, that** said continuous waveform is used over a TTI interval.

3. A method according to claim 1, **characterized in, that** said continuous waveform is interrupted at the end of an OFDM symbol leading to a step in the waveform and that said step is detected and used for synchronization of the asynchronous transmitters (NodeB A, NodeB B, T1, T2).

4. A method according to claim 1, **characterized in, that** the reduced interference is used to choose subcarriers that belong to the different asynchronous transmitters (NodeB A, NodeB B, T1, T2) with a reduced frequency distance down to the smallest possible distance, which is the distance between two adjacent subcarrier frequencies, for transmission of signals (P(1), P(2)).

5. A method according to claim 1 or 4, **characterized in, that** said signals (P(1), P(2)) are transmitted and interference caused by said signals (P(1), P(2)) is avoided when measuring a further signal of a different subcarrier frequency used for channel estimation purposes in one or multiple time shifted windows that are placed time shifted with respect to said signals (P(1), P(2)).

6. A transmitter (NodeB A, NodeB B, T1, T2) for the transmission of signals (P(1), P(2)) by means of OFDM symbols applying at least one subcarrier, **characterized in, that** said transmitter comprises means for controlling at least one of said at least one subcarrier in such a way that a continuous waveform of said at least one of said at least one subcarrier over consecutive OFDM symbols is used for the transmission of signals (P(1), P(2)) by means of said consecutive OFDM symbols.

7. A program module to be executed in a transmitter (NodeB A, NodeB B, T1, T2) for the transmission of signals (P(1), P(2)) by means of OFDM symbols applying at least one subcarrier **characterized in, that** a continuous waveform of at least one of said at least one subcarrier over consecutive OFDM symbols is used for the transmission of signals (P(1), P(2)) by means of said consecutive OFDM symbols.

8. A mobile network comprising transmitters according to claim 5 for performing a method according to claim 1.

## Amended claims in accordance with Rule 86(2) EPC.

1. A method for reducing the interference between OFDM symbols originated from different asynchronous transmitters (NodeB A, NodeB B, T1, T2) using at least one subcarrier **characterized in, that** at least one of said at least one subcarrier is controlled by means of fulfilling the condition

$$g_\kappa(t+1) = e^{j2\pi\frac{\kappa N_S}{N}} \cdot g_\kappa(t),$$

whereby $g_\kappa(t)$ is a symbol at frequency $\kappa$ with the index $t$ denoting to which OFDM symbol the symbol belongs to, $N_s$ is the OFDM symbol length in samples and $N$ is the length of an analysis window in samples used for fast fourier transformation, so that a continuous waveform of said at least one of said at least one subcarrier over consecutive OFDM symbols results, and said at least one of said at least one subcarrier with a continuous waveform is used for the transmission of signals (P(1), P(2)) by means of said consecutive OFDM symbols.

**2.** A method according to claim 1, **characterized in, that** said at least one of said at least one subcarrier with a continuous waveform is used over a TTI interval for the transmission of signals (P(1), P(2)) by means of said consecutive OFDM symbols.

**3.** A method according to claim 2, **characterized in, that** said continuous waveform is interrupted at the end of a TTI interval leading to a step in the waveform and that said step is detected and used for synchronization of the asynchronous transmitters (NodeB A, NodeB B, T1, T2).

**6.** A transmitter (NodeB A, NodeB B, T1, T2) for the transmission of signals (P(1), P(2)) by means of OFDM symbols applying at least one subcarrier, **characterized in, that** said transmitter comprises means for controlling at least one of said at least one subcarrier by means of fulfilling the condition

$$g_\kappa(t+1) = e^{j2\pi\frac{\kappa N_S}{N}} \cdot g_\kappa(t) \,,$$

whereby $g_\kappa(t)$ is a symbol at frequency $\kappa$ with the index $t$ denoting to which OFDM symbol the symbol belongs to, $N_s$ is the OFDM symbol length in samples and $N$ is the length of an analysis window in samples used for fast fourier transformation, so that a continuous waveform of said at least one of said at least one subcarrier over consecutive OFDM symbols results, and for using said at least one of said at least one subcarrier with a continuous waveform for the transmission of signals (P(1), P(2)) by means of said consecutive OFDM symbols.

**7.** A program module to be executed in a transmitter (NodeB A, NodeB B, T1, T2) for the transmission of signals (P(1), P(2)) by means of OFDM symbols applying at least one subcarrier **characterized in, that** at least one of said at least one subcarrier is controlled by means of fulfilling the condition

$$g_\kappa(t+1) = e^{j2\pi\frac{\kappa N_S}{N}} \cdot g_\kappa(t) \,,$$

whereby $g_\kappa(t)$ is a symbol at frequency $\kappa$ with the index $t$ denoting to which OFDM symbol the symbol belongs to, $N_s$ is the OFDM symbol length in samples and $N$ is the length of an analysis window in samples used for fast fourier transformation, so that a continuous waveform of said at least one of said at least one subcarrier over consecutive OFDM symbols results, and said at least one of said at least one subcarrier with a continuous waveform is used for the transmission of signals (P(1), P(2)) by means of said consecutive OFDM symbols.

**8.** A mobile network comprising transmitters according to claim 6 for performing a method according to claim 1.

Fig. 1

Fig. 2

Fig. 3

Fig. 4

Fig. 5

**EP 1 734 711 A1**

European Patent
Office

**EUROPEAN SEARCH REPORT**

Application Number

EP 05 29 1271

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 178 640 A (SONY INTERNATIONAL GMBH) 6 February 2002 (2002-02-06) * abstract * * paragraph [0001] * * paragraph [0008] * * paragraph [0010] - paragraph [0012] * * paragraph [0020] * * figure 3 * | 1-8 | H04L27/26 H04Q7/36 |
| A | EP 1 193 933 A (SYMBOL TECHNOLOGIES, INC) 3 April 2002 (2002-04-03) * paragraph [0014] - paragraph [0016] * * paragraph [0047] - paragraph [0048] * * figures 3B,3C * | 1-8 | |
| A | LEE K F ET AL: "A channel estimator for ofdm transmitter diversity systems without a cyclic prefix" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 April 2003 (2003-04-06), pages IV672-IV675, XP010641249 ISBN: 0-7803-7663-3 1. Introduction 3. Channel estimation for OFDM transmitter diversity systems without a cyclic prefix * abstract * | 1-8 | TECHNICAL FIELDS SEARCHED (Int.Cl.7) H04L H04Q |

The present search report has been drawn up for all claims

| Place of search | Date of completion of the search | Examiner |
|---|---|---|
| Munich | 27 October 2005 | Palacián Lisa, M |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 05 29 1271

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2005

| Patent document cited in search report | | Publication date | Patent family member(s) | | Publication date |
|---|---|---|---|---|---|
| EP 1178640 | A | 06-02-2002 | JP | 2002111620 A | 12-04-2002 |
| | | | US | 2002034213 A1 | 21-03-2002 |
| EP 1193933 | A | 03-04-2002 | AU | 781609 B2 | 02-06-2005 |
| | | | AU | 6564201 A | 11-04-2002 |
| | | | JP | 2002185428 A | 28-06-2002 |
| | | | US | 6754170 B1 | 22-06-2004 |

EPO FORM P0459

For more details about this annex : see Official Journal of the European Patent Office, No. 12/82